# EUROPÄISCHE PATENTSCHRIFT

(11) **EP 3 335 085 B1**
(45) Veröffentlichungstag und Bekanntmachung des Hinweises auf die Patenterteilung: **27.09.2023**
(21) Anmeldenummer: 16753639.0
(22) Anmeldetag: 12.08.2016
(51) Int. Cl.: G05B 19/4069, G05B 17/02, G05B 23/02

(54) **STEUERUNGSSYSTEM SOWIE VERFAHREN ZUM BETRIEB EINES STEUERUNGSSYSTEMS MIT EINER REALEN UND EINER VIRTUELLEN STEUERUNG**
CONTROL SYSTEM, AND METHOD FOR OPERATING A CONTROL SYSTEM WITH A REAL AND A VIRTUAL CONTROLLER
SYSTEME DE COMMANDE ET PROCEDE DE FONCTIONNEMENT D'UN SYSTEME DE COMMANDE DOTE D'UNE COMMANDE REELLE ET VIRTUELLE

(30) Priorität: 18.09.2015 EP 15185936
(43) Veröffentlichungstag der Anmeldung: 20.06.2018
(73) Patentinhaber: Siemens Aktiengesellschaft, 80333 München (DE)
(72) Erfinder: AMTHOR, Karl-Josef, 82229 Seefeld (DE); SEEGER, Guido, 91083 Baiersdorf (DE)
(74) Vertreter: Siemens Patent Attorneys
(86) Internationale Anmeldenummer: PCT/EP2016/069253
(87) Internationale Veröffentlichungsnummer: WO 2017/045847

(56) Entgegenhaltungen:
- EP-A1- 2 833 223
- EP-A2- 1 901 149
- EP-A2- 1 933 214
- DE-A1- 10 353 051
- DE-A1-102013 100 465
- DE-U1-202014 104 791

## Beschreibung

Die Erfindung betrifft ein Steuerungssystem, umfassend eine reale Steuerung zur Steuerung einer realen Anlage oder einer realen Maschine sowie eine virtuelle Steuerung zur Simulation der Steuerung der realen Anlage oder der realen Maschine.

Die Produktion von Werkstücken mit Hilfe von numerisch gesteuerten Werkzeugmaschinen und anderen Produktionsmaschinen muss vielen Anforderungen gerecht werden. Vor allem müssen Werkstücke mit einer definierten Qualität in möglichst kurzer Zeit produziert werden. Stillstandszeiten, z.B. durch Verschleiß, Ausfall oder Beschädigung von Maschinenkomponenten oder Werkzeugen müssen vermieden werden. Werkstücke, die außerhalb der zulässigen Fertigungstoleranzen liegen, müssen vermieden oder wenigstens erkannt und ggf. aussortiert werden.

Ähnlich verhält es sich bei der Steuerung industrieller Anlagen oder industrieller Prozesse. Auch hier sind Ausfallzeiten mit hohen Kosten verbunden und daher unbedingt zu vermeiden.

Um die "Prozessqualität" fortlaufend zu messen und schädliche Tendenzen frühzeitig zu erkennen, setzen die Betreiber der Maschinen oder Anlagen sowohl auf eine integrierte als auch auf eine externe Überwachung von Prozessdaten aller Art. Bei Standard-Problemen, für die alle relevanten Signale direkt in der Steuerung abgreifbar sind, kann der Steuerungshersteller oder der Maschinenhersteller eine integrierte Prozessdatenerfassung und Prozessüberwachung bereitstellen, auf die der Endkunde dann bei Bedarf zugreifen kann.

In vielen Fällen hat der Maschinenbetreiber aber spezielle Bedürfnisse, d.h. er benötigt weitere Daten und Auswertungen um seine Produktion optimal am Laufen zu halten. Er ergänzt dann auf der Maschinensteuerung eine selbst definierte und projektierte "Maschinendatenerfassung" oder "Betriebsdatenerfassung" (MDE/BDE), indem er eine selbst konfigurierbare Funktionalität der Maschinensteuerung nutzt und passend projektiert. Gemäß dieser Projektierung werden dann relevante Prozessdaten von der Maschinensteuerung an übergeordnete Leitsysteme, z.B. ein MES (Manufacturing Execution System) verschickt und dort ausgewertet.

Solche Datenerfassungen belasten die Maschinensteuerung mit zusätzlichen Aufgaben und müssen in der Regel mit dem Maschinenhersteller abgestimmt werden, da die Projektierung der Steuerung gegenüber dem Lieferzustand verändert werden muss. Außerdem müssen jeweils die spezifischen Randbedingungen einer Kombination Maschine/Steuerung berücksichtigt werden. Der Maschinenbetreiber kann sich kaum darauf verlassen, dass für seine Bedürfnisse hinsichtlich Qualitätssicherung Ressourcen in der Steuerung freigehalten wurden. Bei jeder Änderung geht er außerdem das Risiko ein, durch die zusätzliche Belastung, die die Prozessdatenerfassung mit sich bringt, die Produktivität der Maschine zu senken, weil dann für die eigentliche Steuerungsaufgabe weniger Rechenleistung zur Verfügung steht.

Aus Kief "CNC-Handuch" 2013/2014; Teil 5, Kap 4 "Fertigungs-Simulation" sind die Simulation einer Steuerung und einer Maschine mittels einer so genannten virtuellen Steuerung und einer virtuellen Maschine bekannt.

Aus der EP1932618B1 ist die Beobachtung des Arbeitsraumes einer Werkzeugmaschine mittels einer Kamera bekannt, wobei das Kamerabild auf einem Bildschirm angezeigt wird, wobei zeitsynchron mit der realen Bearbeitung eines Werkstücks in der Werkzeugmaschine eine Simulation der Bearbeitung gerechnet wird und wobei zwischen dem Kamerabild und einem durch die Simulation erzeugten virtuellen Bild umgeschaltet werden kann.

Aus der EP1901149A2 sind eine Vorrichtung und ein Verfahren zur Simulation eines Ablaufs zur Bearbeitung eines Werkstücks an einer Werkzeugmaschine bekannt. Dabei werden auch die PLC-Bewegungsabläufe der Werkzeugmaschine mit Hilfe einer PLC-Steuereinrichtung und einer PLC-Ablaufsimulationseinrichtung mit simuliert. Dadurch ist eine realistische Simulation einer Werkzeugmaschine in all ihren wesentlichen Aspekten möglich, insbesondere im Bereich der Schulung und bei der Ermittlung von Maschinenbelegungszeiten.

Aus der DE202014104791U1 ist ein Simulator für eine Blasformanlage bekannt, umfassend:
ein Steuerungssystem für eine real existierende Blasformanlage mit einer Bedieneinheit, einer Anlagensteuerungssoftware sowie mindestens einer I/O-Schnittstelle; eine computersimulierte virtuelle Blasformanlage umfassend ein Verhaltensmodul, ein Visualisierungsmodul und eine Anzeigeeinheit zur Visualisierung der virtuellen Blasformanlage; eine Verbindung zwischen der virtuellen Blasformanlage und dem Steuerungssystem über die mindestens eine I/O-Schnittstelle.

Aus der DE102013100465A1 ist eine Mikroprozessor-gesteuerte Steuerungseinrichtung für eine Spritzgießanlage bekannt. Diese setzt mindestens einen I/O-Controller für eine Sensor/Aktor-Einheit eines Werkzeuges einer Produktionszelle der Spritzgießmaschine ein, um in einer koordinierten Weise Kunststoffteile herzustellen. Dabei ist I/O-Controller mit einem Echtzeit-Prozessor über eine Echtzeit-Ethernet-Verbindung verbunden. Es ist ein Simulationsrechner vorgesehen, der über mindestens eine Echtzeit-Ethernet-Schnittstelle verfügt, die mit der Echtzeit-Ethernet-Verbindung des besagten mindestens einen Echtzeit-Prozessors an Stelle des zugehörigen I/O-Controllers verbindbar ist, wobei der Simulationsrechner ausgestaltet ist, um die Physik des besagten I/O-Controllers des Elementes der Spritzgießanlage zu simulieren, indem in Echtzeit die Output-Signale der Steuerung verarbeitet und über die Simulationsmodelle die Input-Signale zur Steuerung in einer Weise geliefert werden, welche das Verhalten der Physik des besagten Elementes in Echtzeit simuliert.

Aus der DE10353051A1 ist ein Verfahren zur Simulation einer Automatisierungsanlage bekannt, bei dem ein Kommunikationsgerät zur Bedienung und Beobachtung der Automatisierungsanlage Daten mit dieser austauscht. Die Automatisierungsanlage wird in einem Anlagesimulator nachgebildet. Zur Simulation wird das Kommunikationsgerät mit dem Anlagensimulator verbunden und tauscht mit diesem Daten aus.

Aus der EP1933214A2 ist ein Automatisierungssystem zur Erstellung sowie zur Adaption eines Maschinen- oder eines Anlagenmodells sowie zur Prüfung eines Steuerungsprogramms einer Steuerung anhand einer virtuellen Maschine oder einer virtuellen Anlage mit einem Steuerungssystem, einer Datenaufzeichnungseinheit zur Aufzeichnung von Maschinen- oder Anlagendaten sowie einer Datenaufbereitungseinheit zum Analysieren der in der Datenaufzeichnungseinheit aufgezeichneten Daten bekannt. Dabei werden die durch die Datenanalyse ermittelten Kenngrößen des Maschinen- oder Anlagenmodells in der virtuellen Maschine oder der virtuellen Anlage automatisch gespeichert, um ein Maschinen- oder Anlagenverhalten einer reellen Maschine oder Anlage zu simulieren.

Aufgabe der vorliegenden Erfindung ist es daher, zur Ausführung eines industriellen Prozesses bzw. zum Betrieb einer industriellen Anlage oder Maschine relevante Daten zu sammeln und die für diese Datenerfassung erforderliche Belastung der Steuerung für den betreffenden industriellen Prozesses bzw. die Anlage oder Maschine zu minimieren.

Diese Aufgabe wird durch ein Steuerungssystem mit den in Patentanspruch 1 angegebenen Merkmalen gelöst. Ferner wird diese Aufgabe durch ein Verfahren zum Betrieb eines entsprechenden Steuerungssystems mit den in Patentanspruch 5 aufgezeigten Verfahrensschritten gelöst.

Die Erfindung kann vorteilhaft in Verbindung mit einer Vielzahl unterschiedlicher Steuerungen zur Steuerung industrieller Prozesse, Anlagen oder Maschinen eingesetzt werden. Darunter fallen insbesondere speicherprogrammierbare Steuerungen (SPS) zur Steuerung industrieller Prozesse oder Anlagen sowie numerische Steuerungen (CNC) zur Steuerung von Werkzeugmaschinen, Produktionsmaschinen, Robotern etc. Der Begriff "Steuerung" ist im Zusammenhang mit der Erfindung nicht streng im Sinne der Systemtheorie zu verstehen und umfasst selbstverständlich auch Regeleinrichtungen bzw. Regelungsvorgänge.

Ein erfindungsgemäßes Steuerungssystem sieht neben einer oben genannten realen Steuerung auch eine entsprechende virtuelle Steuerung vor, die das Verhalten der realen Steuerung möglichst exakt nachbildet. Dabei ist es im Zusammenhang mit der Erfindung wichtig, dass in der virtuellen Steuerung alle zur Steuerung des Prozesses, der Anlage oder Maschine relevanten Steuerungsparameter zumindest weitgehend zeitsynchron zu der realen Steuerung vorliegen. Die reale Steuerung bekommt somit einen "virtuellen Zwilling" zur Seite gestellt, der die gleiche Steuerungsaufgabe simulativ und schritthaltend zur realen Steuerung ausführt. Steuerungsaufträge werden sowohl an die reale als auch an die virtuelle Steuerung geschickt und von beiden parallel ausgeführt. Daraus resultiert eine weitestgehende Übereinstimmung der in der realen Steuerung und in der virtuellen Steuerung vorhandenen Daten.

Da an der realen Anlage bzw. Maschine auch Ereignisse auftreten können, die von vorne herein nicht bekannt sind, werden diesbezügliche Informationen bzw. Daten von der realen Steuerung auf die virtuelle Steuerung übertragen. Durch diese Datenübertragung wird die virtuelle Steuerung, die parallel zur realen Steuerung läuft, so gestützt, dass sie die Realität - zumindest bereichsweise - sehr genau nachbildet. Nahezu alle in der realen Steuerung vorliegenden Daten liegen dann auch in der virtuellen Steuerung vor und können aus dieser abgefragt werden. Die Abfrage von Daten aus der virtuellen Steuerung belastet die reale Steuerung nicht.

Bezüglich der Daten, die von der virtuellen Steuerung zu der übergeordneten Prozessoreinheit übertragen werden, sind dem Anwender nahezu keine Grenzen gesetzt. Darunter können alle aus der realen Maschine oder Anlage hervorgehenden Sensorsignale fallen, beispielsweise bzgl. Temperatur, Drehzahl, Druck etc. Ferner fallen darunter alle Daten, die Zustände der Maschine bzw. Anlage bzw. Steuerung betreffen (An, Aus, Hochlauf etc.). Weiterhin können auch alle Betriebsdaten der realen und/oder virtuellen Maschine sowie der realen und/oder virtuellen Steuerung darunter fallen, wie z.B. Betriebsstunden, Anzahl gefertigter Teile, Art der gefertigten Teile, Daten bzgl. Qualität der gefertigten Teile. Darüber hinaus können die von der virtuellen Steuerung zu der übergeordneten Prozessoreinheit übertragen Daten bereits aufbereitet sein, beispielsweise dadurch dass bereits statistische Auswertungen der betreffenden Daten, insbesondere in der virtuellen Steuerung, erfolgt sind (z.B. Anzahl der gefertigten Teile in einer bestimmten Zeiteinheit). Neben den genannten Betriebsdaten und Zustandsdaten können weiterhin auch Diagnosedaten von der virtuellen Steuerung zu der übergeordneten Prozessoreinheit übertragen werden. Darunter fallen alle Daten bezüglich Störungen, Ausfallzeiten etc.

Zur Synchronisation der realen Steuerung und der virtuellen Steuerung ist es erforderlich, dass auch der virtuellen Steuerung die für die Steuerung der Maschine oder Anlage relevanten Sensorsignale zur Verfügung gestellt werden. Darunter fallen beispielsweise Achsstellungen, Drehzahlen oder eine Vielzahl weiterer Sensorsignale, beispielsweise bezüglich Temperatur, Druck, Position etc. Vorzugsweise werden die betreffenden Sensorsignale parallel an die reale und die virtuelle Steuerung gesendet. Es ist aber auch möglich, dass Sensorsignale über die reale Steuerung an die virtuelle Steuerung weitergeleitet werden.

Um den zumindest näherungsweise zeitsynchronen Betrieb der realen Steuerung und der virtuellen Steuerung zu ermöglichen, umfassen die dafür erforderlichen Synchronisationsmittel entsprechend schnelle Datenverbindungen zwischen der realen Steuerung und der virtuellen Steuerung bzw. zwischen der Anlage oder Maschine und der virtuellen Steuerung. Darüber hinaus verfügen die reale und die virtuelle Steuerung auch über eine entsprechende, dem Fachmann hinlänglich bekannte Software zur Sicherstellung der im Zusammenhang mit der Erfindung erforderlichen Synchronität.

Zur Synchronisation der virtuellen Steuerung mit der realen Steuerung werden ferner zeitbasierte Daten und/ oder zustandsbasierte Daten von der realen Steuerung auf die virtuelle Steuerung übertragen. Dadurch kann insbesondere eine zeitsynchrone Abarbeitung eines Steuerprogramms, z.B. eines Teileprogramms einer Werkzeugmaschine, durchgeführt werden. Zustandsbasierte Daten spiegeln Systemzustände der realen Steuerung, der realen Maschine oder der realen Anlage wider. Darunter fallen insbesondere viele Daten mit Bezug zu Sensorsignalen der in einer Maschine oder Anlage vorhandenen Sensoren. Diese reichen von einfachen Schalterstellungen über Temperatur, Druck, Lage bis hin zu Daten bezüglich Drehzahlen oder Achsstellungen. Durch die Übertragung der entsprechenden Daten lässt sich die gewünschte Synchronität zwischen der realen Steuerung und der virtuellen Steuerung erreichen. Nicht vorhergesehene Zustände, beispielsweise eine nicht von einem Teileprogramm erfasste Unterbrechungen der Bearbeitung eines Werkstücks mittels einer Werkzeugmaschine, z.B. wg. Werkzeugwechsel aufgrund von Bruch oder Verschleiß, werden so auch von der virtuellen Steuerung mit erfasst.

Beim Betrieb von Anlagen oder Maschinen ist es üblich, Betriebsdaten oder Zustandsdaten bezüglich der gesteuerten Prozesse, Anlagen oder Maschinen an übergeordnete Prozessoreinheiten, wie z.B. ein MES (Manufacturing Execution System), zu übertragen, um dort beispielsweise statistische Auswertungen bezüglich der betreffenden Prozesse, Anlagen oder Maschinen durchführen zu können. Hierfür ist das Übertragen umfangreicher Daten von der Steuerung zu der übergeordneten Prozessoreinheit erforderlich. Um dafür die reale Steuerung nicht zu sehr zusätzlich zu belasten, sieht die Erfindung vor, dass die erforderlichen Betriebsdaten und/oder Zustandsdaten nicht von der realen Steuerung, sondern von der virtuellen Steuerung auf die übergeordnete Prozessoreinheit übertragen werden. Dadurch wird die reale Steuerung durch die übergeordnete Prozessoreinheit nicht zusätzlich belastet. Es muss lediglich sichergestellt werden, dass die virtuelle Steuerung die geforderten Daten an die übergeordnete Prozessoreinheit übertragen kann, ohne dabei die Synchronität mit der realen Steuerung zu verlieren. Dies kann jedoch durch eine entsprechende Rechenleistung der virtuellen Steuerung und durch entsprechende Datenverbindungen zwischen der virtuellen Steuerung und der übergeordneten Prozessoreinheit stets gewährleistet werden. Es müssen lediglich die entsprechenden Mittel zur Verfügung gestellt werden, was jedoch bei der virtuellen Steuerung leicht möglich ist.

Bei der übergeordneten Prozessoreinheit kann es sich um ein Prozessleitsystem, z.B. SCADA- (Supervisory Control and Data Acquisition) System zum Überwachen und/oder Steuern technischer Prozesse, Anlagen oder Maschinen handeln. Weiterhin kann die übergeordnete Prozessoreinheit auch zur Steuerung in der Betriebsleitebene dienen und hierfür vorteilhaft als MES (Manufacturing Execution System) ausgebildet sein. Ein derartiges System ermöglicht die Führung, Lenkung, Steuerung oder Kontrolle der Produktion und umfasst hierfür insbesondere die Erfassung von Betriebsdaten und Maschinendaten. Darüber hinaus könnte es sich bei der übergeordneten Prozessoreinheit auch um ein ERP-(Enterprise-Resource-Planning-)System handeln, welches Daten bezüglich der eingesetzten Betriebsmittel auf Unternehmensleitebene erfasst und auswertet.

Weiterhin ist die virtuelle Steuerung mit einer virtuellen Maschine oder Anlage verbunden. Es wird somit nicht nur das Verhalten der Steuerung simuliert, sondern auch die Maschine bzw. Anlage selbst. Vorteilhaft können dann erfindungsgemäß nicht nur die virtuelle Steuerung betreffende Daten, sondern auch die virtuelle Maschine oder Anlage betreffende Daten an die übergeordnete Prozessoreinheit übertragen werden. Besonders vorteilhaft ist auch eine Datenübertragung zwischen der realen Maschine und der virtuellen Maschine vorgesehen, so dass die virtuelle Maschine, insbesondere im laufenden Betrieb, der realen Maschine oder Anlage angepasst werden kann. Dadurch können z.B. auch bestimmte Zustände der realen Maschine oder Anlage, die insbesondere in Abhängigkeit von Sensorsignalen erfasst werden, bei der Simulation mittels der virtuellen Maschine berücksichtigt werden. Besonders vorteilhaft ist die reale Steuerung als CNC-Steuerung (Computerized Numerical Control) zur Steuerung einer Werkzeugmaschine ausgebildet und mit einer Werkzeugmaschine verbunden und die virtuelle Steuerung als virtuelle CNC ausgebildet und mit einer virtuellen Werkzeugmaschine verbunden. Dann können sogar Daten bezüglich eines durch die virtuelle Werkzeugmaschine gefertigten virtuellen Werkstücks an die übergeordnete Prozessoreinheit übertragen werden.

Die Erfindung wird nachfolgend anhand von Ausführungsbeispielen näher erläutert. Es zeigen:
- FIG 1: die Datenerfassung bei einer Werkzeugmaschine mittels einer virtuellen Steuerung,
- FIG 2: die Datenerfassung bei einer Werkzeugmaschine mittels einer virtuellen Steuerung und einer virtuellen Maschine,
- FIG 3: die Datenerfassung bei einer Werkzeugmaschine mittels einer virtuellen Steuerung, einer virtuellen Maschine und einem virtuellen Werkstück.

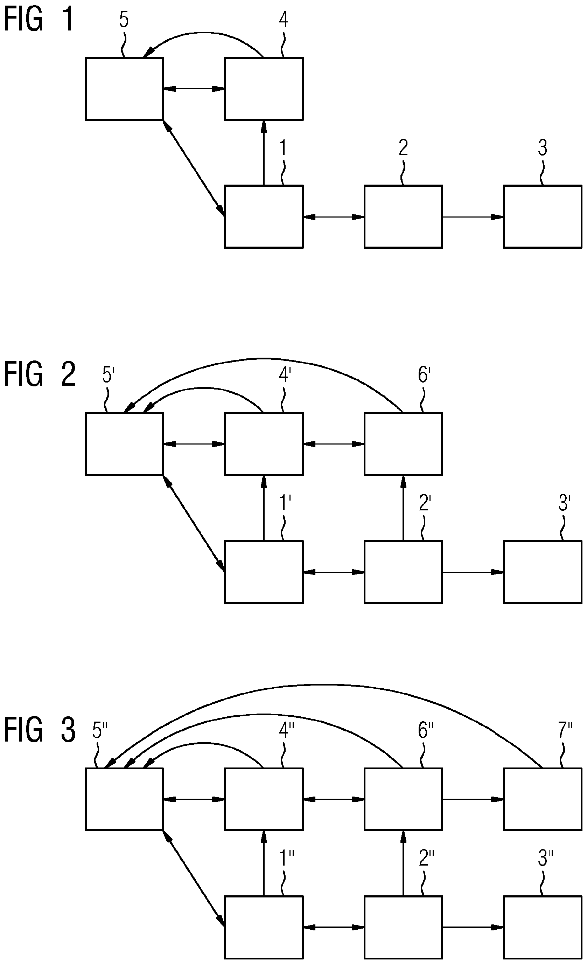

Figur 1 zeigt in stark vereinfachter und schematisierter Darstellung eine reale Steuerung 1 zur Steuerung einer realen Werkzeugmaschine 2. Vorteilhaft ist die reale Steuerung 1 als Computerized Numerical Control (CNC) ausgebildet. Die CNC 1 steuert die Werkzeugmaschine 2 zur Herstellung eines realen Werkstücks 3. In der Regel wird eine Werkzeugmaschine nicht autonom betrieben, sondern sie arbeitet in einem größeren Fertigungsverbund zusammen mit weiteren Werkzeugmaschinen zur Herstellung bestimmter Güter. Dabei ist es erforderlich, die Produktion mittels der einzelnen Werkzeugmaschinen aufeinander abzustimmen. Hierfür werden von jeder einzelnen Werkzeugmaschine, insbesondere deren Steuerung, entsprechende Daten bezüglich Art, Anzahl, Qualität etc. der hergestellten Werkstücke auf eine übergeordnete Prozessoreinheit 5 übertragen. Bei der übergeordneten Prozessoreinheit 5 kann es sich um ein Prozessleitsystem, insbesondere ein SCADA- ein MES- oder ein ERP-System handeln.

Im Ausführungsbeispiel soll die übergeordnete Prozessoreinheit 5 als MES-System ausgeführt sein. Erfindungsgemäß ist neben der realen Steuerung 1 eine virtuelle Steuerung 4 vorhanden, die vorteilhaft auf einer Standard-Hardware aufsetzt und die reale Steuerung 1 weitestgehend simuliert. Insbesondere führt die virtuelle Steuerung 4 das gleiche Teileprogramm aus wie die reale Steuerung 1. Zur Synchronisation der beiden Steuerungen ist eine Datenverbindung zwischen der realen Steuerung 1 und der virtuellen Steuerung 4 vorhanden. Mittels der so übertragenen Daten können beispielsweise Ereignisse an der realen Maschine 2 mittels der Steuerung 1 erfasst und auf die virtuelle Steuerung 4 übertragen werden, so dass zur Gewährleistung der Synchronität zwischen der realen Steuerung 1 und der virtuellen Steuerung 4 auch reale Maschinendaten durch die virtuelle Steuerung berücksichtigt werden. Erfindungsgemäß greift nun das MES-System vorzugsweise nicht mehr direkt auf die Steuerung 1 zu, sondern entnimmt die erforderlichen Daten entweder ausschließlich oder zumindest überwiegend von der virtuellen Steuerung 4. Die Datenerfassung bleibt damit zumindest näherungsweise rückwirkungsfrei für die laufende reale Steuerung bzw. Maschine. Da die virtuelle Steuerung auf Standard-Hardware und Standard-Software aufsetzt und keinen harten Echtzeitbedingungen ausgesetzt ist, können eventuelle Ressourcen-Engpässe durch Austausch dieser Standard-Hardware und -Software gelöst werden. Ein Eingriff in die reale Steuerung 1 ist hierfür nicht erforderlich, so dass die Produktionssicherheit nicht gefährdet wird. Außerdem werden teure Stillstandszeiten, die sich bei Umrüstungen nie vermeiden lassen, eingespart. Änderungen einer bestehenden Datenerfassung können kurzfristig erprobt werden. Bewähren sie sich zur Optimierung der Produktion, lassen sie sich leicht auf andere virtuelle Steuerungen übertragen. Verläuft ein entsprechender Test nicht erfolgreich, werden sie aufwandsarm wieder zurückgenommen.

Bei dem Ausführungsbeispiel gemäß Figur 2 sind zu Figur 1 funktionsgleiche Funktionsblöcke mit dem gleichen, jeweils um einen Strich ergänzten Bezugszeichen versehen. Im Unterschied zu Figur 1 umfasst das Ausführungsbeispiel gemäß Figur 2 auch eine virtuelle Maschine 6', durch die das Verhalten der realen Maschine 2' möglichst realitätsnah simuliert werden kann. Relevante Daten bezüglich der realen Maschine 2' lassen sich daher auch ohne Umweg über die virtuelle Maschinensteuerung 4' direkt von der virtuellen Maschine 6' abgreifen, vorausgesetzt letztere verfügt über eine entsprechende Schnittstelle zur Datenerfassung. Das ermöglicht eine präzise Erfassung der relevanten Daten. Ungenauigkeiten durch Abtasteffekte und Datenkonvertierungen werden so vermieden. Steuerungsexperten müssen seltener konsultiert werden, da die virtuelle Steuerung 4' nicht alle Anfragen beantworten muss.

Bei einer weiteren vorteilhaften Ausgestaltung der Erfindung wird nun auch das reale Werkstück 3 durch ein virtuelles Werkstück simuliert, welches in Figur 3 mit dem Bezugszeichen 7'' versehen ist. Sofern auch das reale Werkstück 3'' durch ein virtuelles Werkstück 7'' simuliert wird und letzteres eine Schnittstelle zur Datenerfassung bietet, lassen sich die relevanten Daten dort direkt abgreifen, ohne Umwege über die virtuelle Maschine 6'' bzw. die virtuelle Maschinensteuerung 4''. Auch dies erleichtert und beschleunigt die Abfrage der betreffenden Daten.

Zusammenfassend erhält der Betreiber der Produktion für jeden Zustand, der im virtuellen System über Abfrage-Schnittstellen zugänglich gemacht ist, vollständige Transparenz, ohne die laufende Produktion zu beeinflussen. Nur sein Implementierungsaufwand und die Leistungsfähigkeit der Ablaufplattform für das virtuelle System setzen ihm Grenzen, die er durch entsprechende Hardware- und Softwarekomponenten jedoch leicht umgehen kann. Die Ablaufplattform muss so leistungsfähig sein, dass das virtuelle Teilsystem dem realen im Mittel folgen kann. Geschwindigkeitsschwankungen durch kurzzeitige Ressourcenengpässe sind im virtuellen Teilsystem erlaubt und können durch Zwischenspeicherung der stützenden Zustandsinformationen aus dem realen System überbrückt werden. Ein dauerndes Zurückfallen des virtuellen Teilsystems würde den Zweck der Betriebsdatenerfassung jedoch nicht mehr erfüllen.

Der Maschinenhersteller muss bei Änderungen in der Regel nicht behelligt werden, da die einmal eingerichtete Konfiguration unverändert bleibt. Der Betreiber der Produktion ist auch der Betreiber des virtuellen Systems und hat die volle Hoheit über dessen Funktionalität und kann diese Hoheit für seine Zwecke nutzen, solange er die Anteile, die für das korrekte Nachbilden des realen Verhaltens wesentlich sind, nicht verändert.

Lediglich in den Fällen, in denen aus der realen Maschinensteuerung zusätzliche Informationen benötigt werden, um die Nachführgenauigkeit des virtuellen Systems zu erhöhen, muss die Konfiguration der realen Maschinensteuerung nachträglich verändert werden.

## Patentansprüche

1. Steuerungssystem (1, 4, 5; 1', 4', 5'; 1", 4", 5''), umfassend
- eine reale Steuerung (1; 1'; 1''), die zur Steuerung einer realen Anlage oder einer realen Maschine mit der realen Anlage oder der realen Maschine verbunden ist,
- eine virtuelle Steuerung (4; 4'; 4''), die zur Simulation der Steuerung der realen Anlage oder der realen Maschine mit einer virtuellen Anlage oder einer virtuellen Maschine (6'; 6'') verbunden ist,
- Synchronisationsmittel zur Synchronisation der realen Steuerung (1; 1'; 1'') und der virtuellen Steuerung (4; 4'; 4"),
- eine übergeordnete Prozessoreinheit (5; 5'; 5'') zum Erfassen von Daten bezüglich der realen Anlage oder der realen Maschine und zum Verarbeiten dieser Daten,
wobei die virtuelle Steuerung (4; 4'; 4'') die von der übergeordneten Prozessoreinheit (5; 5'; 5'') erfassten Daten von der virtuellen Steuerung (4; 4'; 4'') auf die übergeordnete Prozessoreinheit (5; 5'; 5'') überträgt,
wobei die reale Steuerung (1; 1'; 1'') und die virtuelle Steuerung (4; 4'; 4'') synchron das gleiche Steuerprogramm ausführen und
wobei die reale Steuerung (1; 1'; 1'') zur Synchronisation mit der virtuellen Steuerung (4; 4'; 4'') zeitbasierte Daten und/oder zustandsbasierte Daten von der realen Steuerung auf die virtuelle Steuerung (4; 4'; 4'') überträgt.

2. Steuerungssystem (1, 4, 5; 1', 4', 5'; 1'', 4'', 5'') nach Anspruch 1, wobei die virtuelle Steuerung (4; 4'; 4'') Betriebsdaten und/oder Zustandsdaten und/oder Diagnosedaten bezüglich der realen Anlage oder der realen Maschine von der virtuellen Steuerung (4; 4'; 4'') auf die übergeordnete Prozessoreinheit (5; 5'; 5'') überträgt.

3. Steuerungssystem (1, 4, 5; 1', 4', 5'; 1'', 4'', 5'') nach Anspruch 1 oder 2, wobei die übergeordnete Prozessoreinheit (5; 5'; 5'') als MES zur Führung, Lenkung, Steuerung oder Kontrolle einer Produktion ausgebildet ist.

4. Steuerungssystem (1, 4, 5; 1', 4', 5'; 1'', 4'', 5'') nach einem der vorherigen Ansprüche, wobei die reale Steuerung (1; 1'; 1'') als CNC zur Steuerung einer Werkzeugmaschine (2) ausgebildet ist.

5. Verfahren zum Betrieb eines Steuerungssystems (1, 4, 5; 1', 4', 5'; 1", 4'', 5''), wobei
- eine reale Anlage oder eine reale Maschine von einer realen Steuerung (1; 1'; 1") gesteuert wird,
- die Steuerung der realen Anlage oder der realen Maschine von einer virtuellen Steuerung (4; 4'; 4'') simuliert wird, die mit einer virtuellen Anlage oder einer virtuellen Maschine (6'; 6'') verbunden ist,
- die reale Steuerung (1; 1'; 1") und die virtuelle Steuerung (4; 4'; 4'') synchronisiert werden,
- eine übergeordnete Prozessoreinheit (5; 5'; 5'') Daten bezüglich der realen Anlage oder der realen Maschine erfasst und verarbeitet,
wobei die von der übergeordneten Prozessoreinheit (5; 5'; 5'') erfassten Daten von der virtuellen Steuerung (4; 4'; 4'') auf die übergeordnete Prozessoreinheit (5; 5'; 5'') übertragen werden,
wobei von der realen Steuerung und von der virtuellen Steuerung synchron das gleiche Steuerprogramm ausgeführt werden und
wobei zur Synchronisation der virtuellen Steuerung (4; 4'; 4'') mit der realen Steuerung (1; 1'; 1'') zeitbasierte Daten und/oder zustandsbasierte Daten von der realen Steuerung auf die virtuelle Steuerung (4; 4'; 4'') übertragen werden.

6. Verfahren zum Betrieb eines Steuerungssystems (1, 4, 5; 1', 4', 5'; 1'', 4", 5'') nach Anspruch 5, wobei Betriebsdaten und/oder Zustandsdaten und/oder Diagnosedaten bezüglich der realen Anlage oder der realen Maschine, von der virtuellen Steuerung (4; 4'; 4") auf die übergeordnete Prozessoreinheit (5; 5'; 5'') übertragen werden.

7. Verfahren zum Betrieb eines Steuerungssystems (1, 4, 5; 1', 4', 5'; 1'', 4'', 5'') nach Anspruch 5 oder 6, wobei anhand der mittels der übergeordneten Prozessoreinheit (5; 5'; 5'') erfassten oder/oder generierten Betriebsdaten und/oder Zustandsdaten Service-Daten generiert werden.

8. Verfahren zum Betrieb eines Steuerungssystems (1, 4, 5; 1', 4', 5'; 1'', 4'', 5'') nach Anspruch 7, wobei die Service-Daten automatisch an einen Service-Provider übermittelt werden.

## Claims

1. Control system (1, 4, 5; 1', 4', 5'; 1", 4'', 5''), comprising
- a real control (1; 1'; 1'') which, to control a real plant or a real machine, is connected to the real plant or the real machine,
- a virtual control (4; 4'; 4'') which, to simulate the control of the real plant or the real machine, is connected to a virtual plant or a virtual machine (6'; 6''),
- synchronisation means for synchronising the real control (1; 1'; 1'') and the virtual control (4; 4'; 4"),
- a higher-level processor unit (5; 5'; 5'') for detecting data with respect to the real plant or the real machine and for processing this data,
wherein the virtual control (4; 4'; 4'') transfers the data detected by the higher-level processor unit (5; 5'; 5'') from the virtual control (4; 4'; 4'') to the higher-level processor unit (5; 5'; 5''),
wherein the real control (1; 1'; 1'') and the virtual control (4; 4'; 4'') execute the same control program synchronously and
wherein the real control (1; 1'; 1'') transfers time-based data and/or state-based data from the real control to the virtual control (4; 4'; 4'') for synchronisation with the virtual control (4; 4'; 4").

2. Control system (1, 4, 5; 1', 4', 5'; 1'', 4", 5") according to claim 1, wherein the virtual control (4; 4'; 4'') transfers operating data and/or state data and/or diagnostic data with respect to the real plant or the real machine from the virtual control (4; 4'; 4'') to the higher-level processor unit (5; 5'; 5").

3. Control system (1, 4, 5; 1', 4', 5'; 1", 4'', 5'') according to claim 1 or 2, wherein the higher-level processor unit (5; 5'; 5'') is designed as an MES for guidance, direction, control or supervision of production.

4. Control system (1, 4, 5; 1', 4', 5'; 1'', 4'', 5'') according to one of the preceding claims, wherein the real control (1; 1'; 1'') is designed as a CNC for controlling a machine tool (2).

5. Method for operating a control system (1, 4, 5; 1', 4', 5'; 1", 4'', 5''), wherein
- a real plant or a real machine is controlled by a real control (1; 1'; 1''),
- the control of the real plant or the real machine is simulated by a virtual control (4; 4'; 4''), which is connected to a virtual plant or a virtual machine (6'; 6''),
- the real control (1; 1'; 1'') and the virtual control (4; 4'; 4") are synchronised,
- a higher-level processor unit (5; 5'; 5'') detects and processes data with regard to the real plant or the real machine,
wherein the data detected by the higher-level processor unit (5; 5'; 5'') is transferred from the virtual control (4; 4'; 4'') to the higher-level processor unit (5; 5'; 5''),
wherein the same control program is synchronously executed by the real control and by the virtual control and
wherein time-based data and/or state-based data is transferred from the real control to the virtual control (4; 4'; 4'') for synchronisation of the virtual control (4; 4'; 4'') with the real control (1; 1'; 1'').

6. Method for operating a control system (1, 4, 5; 1', 4', 5'; 1", 4", 5'') according to claim 5, wherein operating data and/or state data and/or diagnostics data with regard to the real plant or the real machine is transferred from the virtual control (4; 4'; 4'') to the higher-level processor unit (5; 5' ; 5").

7. Method for operating a control system (1, 4, 5; 1', 4', 5'; 1'', 4'', 5'') according to claim 5 or 6, wherein service data is generated by means of the operating data and/or state data detected and/or generated by means of the higher-level processor unit (5; 5'; 5'').

8. Method for operating a control system (1, 4, 5; 1', 4', 5'; 1'', 4'', 5'') according to claim 7, wherein the service data is automatically transferred to a service provider.

## Revendications

1. Système (1, 4, 5 ; 1', 4', 5' ; 1'', 4'', 5'') de commande, comprenant
- une commande (1 ; 1' ; 1'') réelle, qui pour la commande d'une installation réelle ou d'une machine réelle, est reliée à l'installation réelle ou à la machine réelle,
- une commande (4 ; 4' ; 4' ') virtuelle, qui, pour la simulation de la commande de l'installation réelle ou de la machine réelle, est reliée à une installation virtuelle ou à une machine (6' ; 6'') virtuelle,
- des moyens de synchronisation pour la synchronisation de la commande (1 ; 1' ; 1'') réelle et de la commande (4 ; 4' ; 4") virtuelle,
- une unité (5 ; 5' ; 5'') de processeur supérieure hiérarchiquement pour la saisie de données concernant l'installation réelle ou la machine réelle et pour le traitement de ces données,
dans lequel la commande (4 ; 4' ; 4'') virtuelle transmet les données saisies par l'unité (5 ; 5' ; 5'') de processeur supérieure hiérarchiquement de la commande (4 ; 4' ; 4'') virtuelle à l'unité (5 ; 5' ; 5'') de processeur supérieure hiérarchiquement,
dans lequel la commande (1 ; 1' ; 1'') réelle et la commande (4 ; 4' ; 4'') virtuelle exécutent en synchronisme le même programme de commande et
dans lequel l'unité (1 ; 1' ; 1'') réelle transmet de la commande réelle à la commande (4 ; 4' ; 4") virtuelle, pour la synchronisation avec la commande (4 ; 4' ; 4'') virtuelle, des données reposant sur le temps et/ou des données reposant sur l'état.

2. Système (1, 4, 5 ; 1', 4', 5' ; 1", 4", 5") de commande suivant la revendication 1, dans lequel la commande (4 ; 4' ; 4'') virtuelle transmet de la commande (4 ; 4' ; 4'') virtuelle à l'unité (5 ; 5' ; 5") de processeur supérieure hiérarchiquement des données de fonctionnement et/ou des données d'état et/ou des données de diagnostic concernant l'installation réelle ou la machine réelle.

3. Système (1, 4, 5 ; 1', 4', 5' ; 1'', 4'', 5'') de commande suivant la revendication 1 ou 2, dans lequel l'unité (5 ; 5' ; 5'') de processeur supérieure hiérarchiquement est constituée en MES pour la conduite, la gestion, la commande ou le contrôle d'une production.

4. Système (1, 4, 5 ; 1', 4', 5' ; 1'', 4", 5'') de commande suivant l'une des revendications précédentes, dans lequel la commande (1 ; 1' ; 1'') réelle est constituée en CNC pour la commande d'une machine-outil (2).

5. Procédé pour faire fonctionner un système (1, 4, 5 ; 1', 4', 5' ; 1'', 4'', 5'') de commande, dans lequel
- on commande une installation réelle ou une machine réelle par une commande (1 ; 1' ; 1'') réelle,
- on simule la commande de l'installation réelle ou une machine réelle par une commande (4 ; 4' ; 4'') virtuelle, qui est reliée à une installation virtuelle ou à une machine (6' ; 6'') réelle,
- on synchronise la commande (1 ; 1' ; 1'') réelle et la commande (4 ; 4' ; 4'') virtuelle,
- une unité (5 ; 5' ; 5") de processeur supérieure hiérarchiquement pour la saisie de données concernant l'installation réelle ou la machine réelle et pour le traitement de ces données,
dans lequel on transmet les données saisies par l'unité (5 ; 5' ; 5'') de processeur supérieure hiérarchiquement de la commande (4 ; 4' ; 4") virtuelle à l'unité (5 ; 5' ; 5'') de processeur supérieure hiérarchiquement,
dans lequel on exécute par la commande réelle et par la commande virtuelle en synchronisme le même programme de commande et
dans lequel pour la synchronisation de la commande (4 ; 4' ; 4'') virtuelle avec la commande (1 ; 1' ; 1'') réelle, on transmet de la commande réelle à la commande (4 ; 4' ; 4'') virtuelle des données reposant sur le temps et/ou des données reposant sur l'état.

6. Procédé pour faire fonctionner un système (1, 4, 5 ; 1', 4', 5' ; 1'', 4'', 5'') de commande suivant la revendication 5, dans lequel on transmet de la commande (4 ; 4' ; 4'') virtuelle à l'unité (5 ; 5' ; 5") de processeur supérieure hiérarchiquement des données de fonctionnement et/ou des données d'état et/ou des données de diagnostic concernant l'installation réelle ou la machine réelle.

7. Procédé pour faire fonctionner un système (1, 4, 5 ; 1', 4', 5' ; 1'', 4'', 5'') de commande suivant la revendication 5 ou 6, dans lequel on créé des données de service à l'aide des données de fonctionnement et/ou des données d'état créées saisies au moyen de l'unité (5 ; 5' ; 5'') de processeur supérieure hiérarchiquement.

8. Procédé pour faire fonctionner un système (1, 4, 5 ; 1', 4', 5' ; 1", 4", 5") de commande suivant la revendication 7, dans lequel on transmet les données de service automatiquement à un fournisseur de services.
